# EUROPEAN PATENT APPLICATION

(11) **EP 4 745 056 A1**
(43) Date of publication of application: **20.05.2026**
(21) Application number: 24839327.4
(22) Date of filing: 22.05.2024
(51) Int. Cl.: B65G 1/04

(54) **TRANSPORT SYSTEM**

(30) Priority: 13.07.2023 JP 2023115137
(71) Applicant: Daifuku Co., Ltd., Osaka-shi, Osaka 555-0012 (JP)
(72) Inventor: NAKAMURA, Takanori, Gamo-gun, Shiga 529-1692 (JP); KOTAKA, Masashi, Gamo-gun, Shiga 529-1692 (JP); TAKEDA, Tomohiro, Gamo-gun, Shiga 529-1692 (JP)
(74) Representative: Hoffmann Eitle
(86) International application number: PCT/JP2024/018865
(87) International publication number: WO 2025/013430

(57) **Abstract**

A conveying system includes a first carriage, a second carriage, a remote controller, and a control device, the first carriage is capable of conveying the second carriage and an article along a first conveying path, the first carriage includes a signal transmission unit that transmits, in a wireless manner, a control signal of a second actuating unit input from the remote controller to the second carriage corresponding to the first carriage in a case where the remote controller and the first carriage are connected via a cable, and the second control unit controls a second actuating unit in accordance with the control signal in a case where the second carriage receives the control signal from the signal transmission unit.

## Description

### Field

The present invention relates to a conveying system.

### Background

In the related art, there is known an article conveying system including a first carriage and a second carriage that conveys an article between the first carriage and a storage position (for example, refer to Patent Literature 1).

### Citation List

### Patent Literature

Patent Literature 1: JP 2020-117405 A

### Summary

### Technical Problem

This type of conveying system may be configured such that, in a case where some abnormality occurs in the second carriage or the like, a worker can perform inspection by test-operating the second carriage using a remote controller capable of wireless communication, in a state where a normal conveying operation is stopped.

In this configuration, in a case where the remote controller is shared among a plurality of second carriages, a worker performs an operation on the remote controller to select a specific second carriage.

In such a case, when the worker erroneously selects a different second carriage, there is a possibility that the erroneously selected second carriage may operate in response to the operation of the remote controller by the worker.

Accordingly, one of the objects of the present invention is to provide a conveying system capable of more reliably suppressing that a second carriage different from a specific second carriage is operated in response to an operation of a remote controller by a worker.

### Solution to Problem

A conveying system according to the present invention includes: a first carriage configured to be movable along a first conveying path and including a first actuating unit and a first control unit configured to control the first actuating unit; a second carriage configured to be movable along a second conveying path intersecting with the first conveying path and movable between the first carriage and the second conveying path, including a second actuating unit and a second control unit configured to control the second actuating unit, the second carriage being configured to carry an article; a remote controller configured to be connected to the first carriage via a cable, including a manual operation unit, the remote controller being configured to input a control signal corresponding to an operation of the manual operation unit to the first carriage via the cable; and a control device configured to output a control signal to the first control unit and the second control unit in a wireless manner, wherein the first carriage is configured to convey the second carriage and the article along the first conveying path, the first carriage includes a signal transmission unit configured to transmit, in a wireless manner, a control signal of the second actuating unit input from the remote controller to the second carriage corresponding to the first carriage in a case where the remote controller and the first carriage are connected via the cable, and the second control unit is configured to control the second actuating unit in accordance with the control signal in a case where the second carriage receives the control signal from the signal transmission unit.

### Brief Description of Drawings

FIG. 1 is an exemplary and schematic plan view of a conveying system according to an embodiment, and is a diagram illustrating a state where a parent carriage (first carriage) carries a child carriage (second carriage) thereon and moves along a first conveying path without carrying an article.
FIG. 2 is an exemplary and schematic plan view of a part of the conveying system according to the embodiment, and is a diagram illustrating a state where a child carriage moves from a parent carriage to a second conveying path without carrying an article.
FIG. 3 is an exemplary and schematic plan view of a part of the conveying system according to the embodiment, and is a diagram illustrating a state where a child carriage moves from a second conveying path to a parent carriage while carrying an article.
FIG. 4 is an exemplary and schematic plan view of a part of the conveying system according to the embodiment, and is a diagram illustrating a state where a parent carriage moves along a first conveying path while carrying both an article and a child carriage.
FIG. 5 is an exemplary and schematic side view of a part of the conveying system according to the embodiment, and is a diagram illustrating a parent carriage that carries a child carriage and an article on a first conveying path.
FIG. 6 is an exemplary and schematic side view of a part of the conveying system according to the embodiment, and is a diagram illustrating a child carriage that carries an article on the second conveying path.
FIG. 7 illustrates an exemplary and schematic side view of a part of the conveying system according to the embodiment, and is a diagram illustrating a state where an article is positioned at the storage position.
FIG. 8 is an exemplary control block diagram of the conveying system according to the embodiment.
FIG. 9 is a flowchart illustrating an example of a procedure for switching between an automatic mode and a manual mode in a parent carriage of the conveying system according to the embodiment.
FIG. 10 is a schematic diagram illustrating an example of a changeover switch provided in a parent carriage of the conveying system according to the embodiment.
FIG. 11 is an explanatory diagram illustrating an example of a configuration of control signals wirelessly transmitted from a parent carriage to a child carriage in the conveying system according to the embodiment.
FIG. 12 is a flowchart illustrating an example of a procedure for switching between an automatic mode and a manual mode in a child carriage of the conveying system according to the embodiment.
FIG. 13 is an exemplary and schematic front view of a remote controller that is connected to, in a wired manner, a parent carriage of the conveying system according to the embodiment.
FIG. 14 is a schematic diagram illustrating a modification example of a changeover switch provided in a parent carriage of the conveying system according to the embodiment.

### Description of Embodiments

Hereinafter, exemplary embodiments of the present invention will be disclosed. Configurations of the embodiments described below, and operations and results (effects) obtained therefrom, are merely examples. The present invention can also be realized by configurations other than those disclosed in the following embodiments. In addition, according to the present invention, it is possible to obtain at least one of various effects (including derivative effects) obtained by the configurations described below.

In the present specification, ordinal numbers may be assigned for convenience to distinguish directions, parts, members, components, mechanisms, and the like. In addition, the ordinal numbers do not indicate priority or order, nor do they specify quantity.

In addition, in the present specification, the fact that an actuating unit operates electrically means that the actuating unit operates in response to a control signal that is an electrical signal from a control unit.

In each drawing, arrows indicating directions are drawn. The X direction and Y direction extend substantially along the horizontal direction. In addition, the Z direction extends substantially along an up-down direction and is oriented vertically upward. The X direction, Y direction, and Z direction are orthogonal to each other.

In addition, in each drawing, a symbol (10, A) representing a parent carriage or a conveyance object may be accompanied by a symbol (pd, pr, p1 to p3) in parentheses indicating their positions.

### [Configuration of Conveying Path and Conveyance of Article]

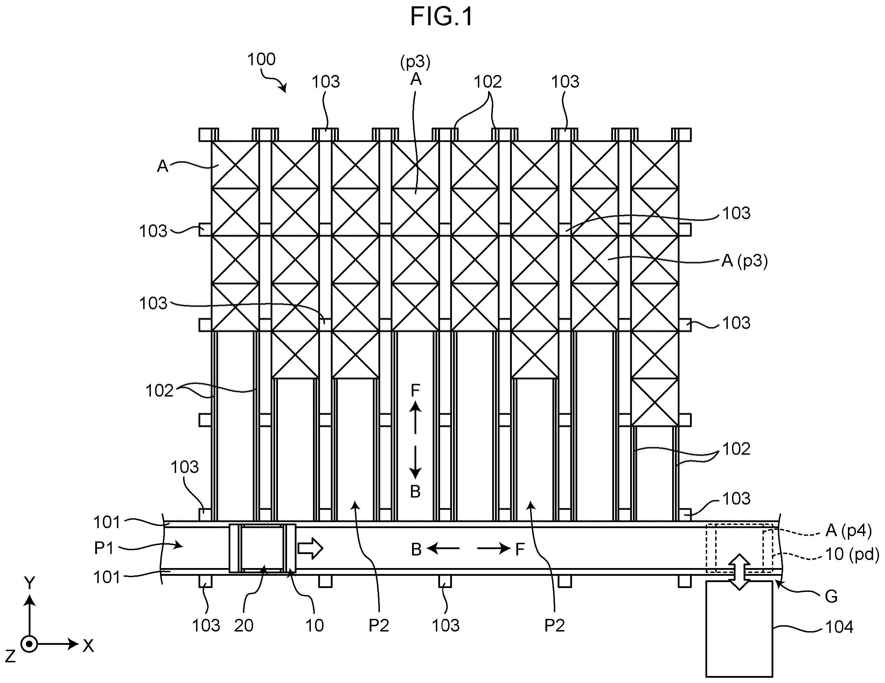

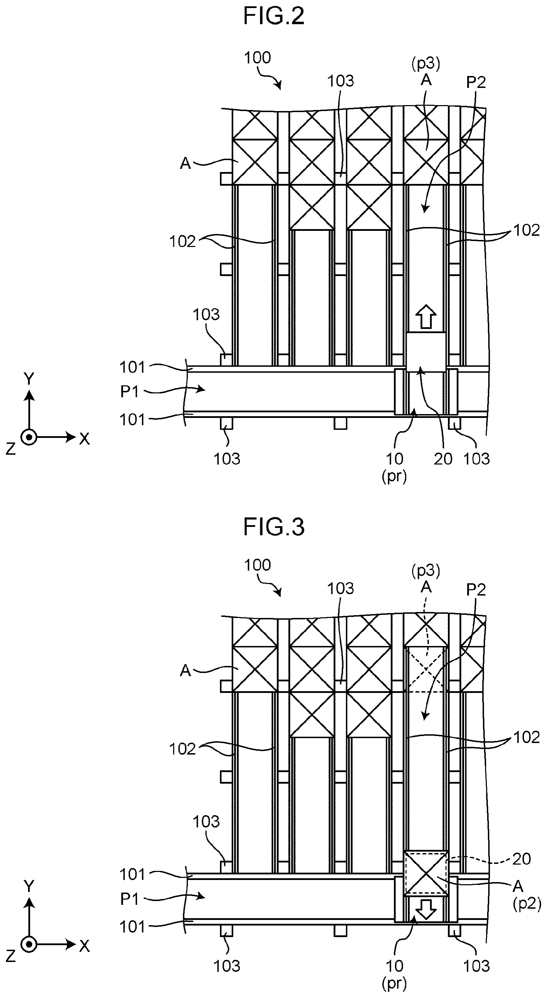

FIG. 1 is a plan view of a conveying system 100 of an embodiment. In addition, FIGS. 2 to 4 are plan views illustrating parts of the conveying system 100, and are diagrams in which the positions of a parent carriage 10, a child carriage 20, and a conveyance object A are different from those in FIG. 1.

As illustrated in FIG. 1, the conveying system 100 includes a first conveying path P1 extending in the X direction, a plurality of second conveying paths P2 extending in the Y direction, the parent carriage 10 that is movable along the first conveying path P1, the child carriage 20 that is movable along the second conveying paths P2, and a conveying device 104. The parent carriage 10 is an example of a first carriage, and the child carriage 20 is an example of a second carriage.

The conveying system 100 has a three-dimensional structure in which a configuration illustrated in FIG. 1 is layered in the Z direction. In other words, the configuration illustrated in FIG. 1 (excluding the conveying device 104) corresponds to a configuration for one floor.

An entrance/exit G for the conveyance object A on each floor faces the first conveying path P1, and the parent carriage 10 is configured to be stoppable at a delivery position pd facing the entrance/exit G.

The conveying device 104 is a mechanism that conveys the conveyance object A between a position facing the entrance/exit G on a side opposite to the delivery position pd and a position facing an entrance/exit (not illustrated) for the conveyance object A in the conveying system 100. The conveying device 104 includes, for example, a lifter that conveys the conveyance object A substantially in a vertical direction, a conveyor that conveys the conveyance object A substantially in the horizontal direction, and the like.

Between the conveying device 104 and the parent carriage 10 positioned at the delivery position pd, the conveyance object A is delivered by a conveying mechanism such as a conveyor provided in at least one of the parent carriage 10 and the conveying device 104. Note that the position and number of entrances/exits G in the conveying system 100 are not limited to the example in FIG. 1.

The conveyance object A is stored at a third position p3 on the second conveying path P2. As one example, on each second conveying path P2, a plurality of conveyance objects A are arranged in series so as to be packed from a side farther from the first conveying path P1. The third position p3 may also be referred to as a storage position.

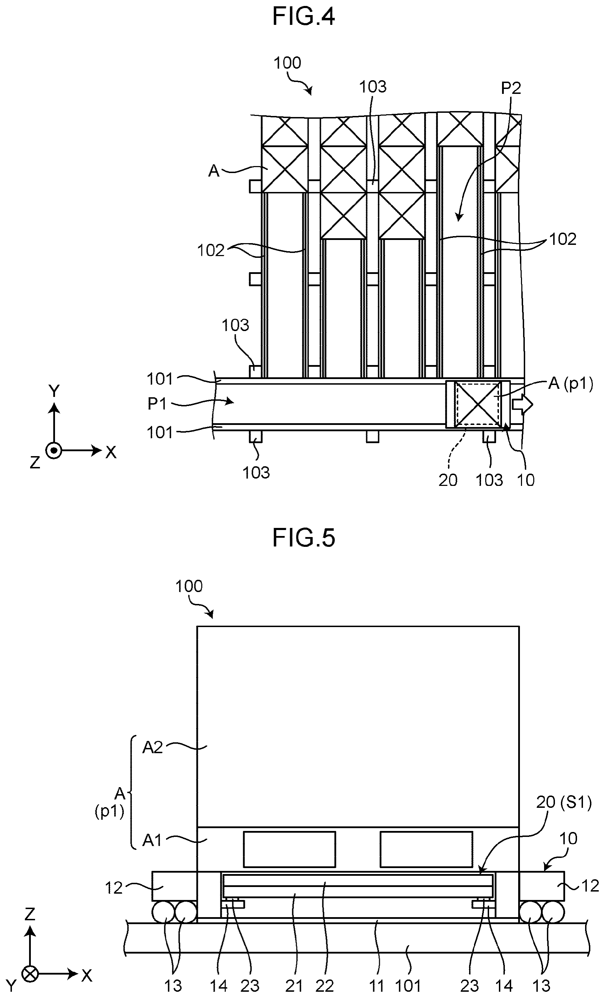

As illustrated in FIG. 1, the parent carriage 10 is configured to be movable along the first conveying path P1 in a state of carrying the child carriage 20. In addition, as illustrated in FIGS. 2 and 3, the child carriage 20 is configured to move between the parent carriage 10 and each second conveying path P2 while the parent carriage 10 is stopped at a relay position pr facing the corresponding second conveying path P2, and to convey the conveyance object A between the position on the parent carriage 10 and the third position p3. Then, as illustrated in FIG. 4, the parent carriage 10 is configured to be movable along the first conveying path P1 in a state of carrying the child carriage 20 together with the conveyance object A.

With such a configuration, the parent carriage 10 and the child carriage 20 are able to convey the conveyance object A between the third position p3 serving as a storage position and a fourth position p4 on the parent carriage 10 facing the entrance/exit G.

In the present embodiment, the conveyance of the conveyance object A within one floor is performed by one parent carriage 10 and one child carriage 20 corresponding to the parent carriage 10. That is, in each floor, one parent carriage 10 and one child carriage 20 are provided, and the parent carriage 10 and the child carriage 20 correspond to each other in a one-to-one relationship.

As illustrated in FIG. 1, the first conveying path P1 has two parallel rails 101 extending in the X direction. The second conveying path P2 has two parallel rails 102 extending in the Y direction. In addition, the conveying system 100 also includes a plurality of columns 103 extending in the Z direction. The plurality of columns 103 support the rails 101 and 102. A frame structure is constructed by these plurality of rails 101, the plurality of rails 102, and the plurality of columns 103.

### [Configuration of Conveyance Object, Parent Carriage, and Child Carriage]

FIG. 5 is a side view of a part of the conveying system 100 including the parent carriage 10 and the child carriage 20.

As illustrated in FIG. 5, in the present embodiment, the conveyance object A includes a pallet A1 and an article A2 placed on the pallet A1. On the pallet A1, one article A2 may be placed or a plurality of articles A2 may be placed. In addition, the article A2 may take various forms. Note that the conveying system 100 of the present embodiment can also be applied to a case where the conveyance object A does not include the pallet A1. In this case, the conveyance object A is an example of an article.

The parent carriage 10 includes a base 11, side portions 12, rollers 13, and support portions 14.

The base 11 extends in at least the X direction intersecting with the Z direction and has, for example, a plate-like or frame-like configuration. The base 11 may be formed of a single member or may include a plurality of members. The side portions 12 respectively protrude in the Z direction and extend in the Y direction at an end portion in the X direction of the base 11 and an end portion in a direction opposite to the X direction. The base 11 and the two side portions 12 form, when viewed in the Y direction, a substantially U-shaped space capable of accommodating the child carriage 20. This space may be referred to as an accommodating portion or a housing portion. The rollers 13 are rotatably supported on the base 11 or the side portions 12 about a rotational center extending in the Y direction and are able to roll in the X direction or in the direction opposite to the X direction on the rails 101 that constitute the first conveying path P1. The parent carriage 10 is movable along the first conveying path P1 by the rolling of the rollers 13.

The support portions 14 protrude from the respective two side portions 12 so as to face each other in the X direction, and extend in the Y direction with a substantially constant width in the X direction and a substantially constant thickness in the Z direction. The support portions 14 function as rails that support rollers 23 of the child carriage 20 so as to be rollable in the Y direction and a direction opposite to the Y direction. In addition, the support portions 14 are configured such that, in a state where the parent carriage 10 is stopped at the above-described relay position pr (refer to FIGS. 2 and 3), the support portions 14 are aligned in the Y direction with the rails 102 constituting the second conveying path P2, allowing the rollers 23 to move while rolling between the support portions 14 and the rails 102.

The child carriage 20 includes a base 21, a support portion 22, and the rollers 23.

The base 21 extends in at least the Y direction intersecting with the Z direction and has, for example, a plate-like or frame-like configuration. The base 21 may be formed of a single member or may include a plurality of members. The support portion 22 has a placement surface that extends while intersecting with the Z direction, and supports the conveyance object A on the placement surface. In addition, the rollers 23 are rotatably supported by the base 21 about a rotational center extending in the X direction, and are able to roll in the Y direction or in the direction opposite to the Y direction on the support portions 14 or the rails 102.

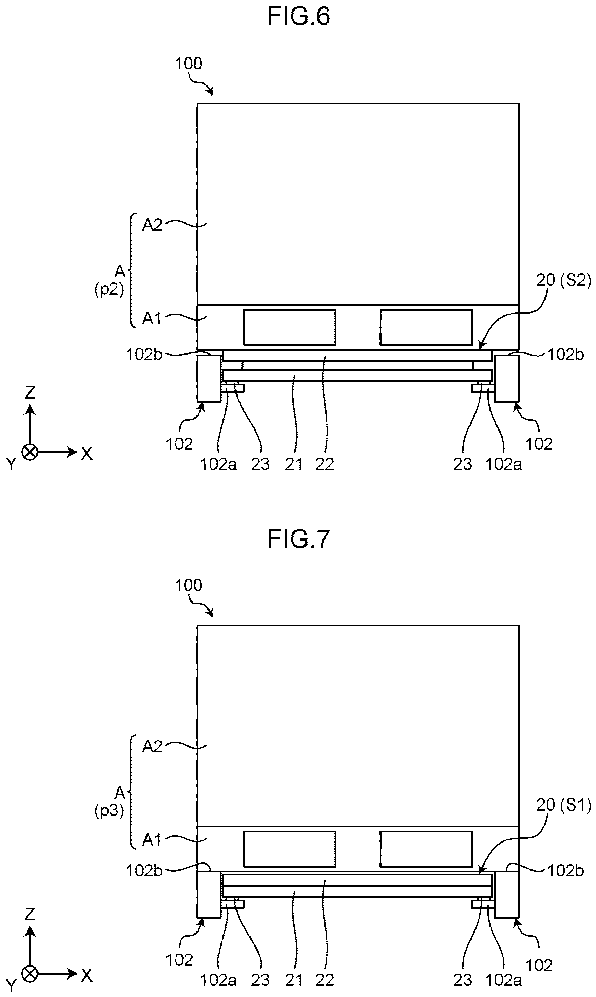

FIGS. 6 and 7 are side views of a part of the conveying system 100 which includes the child carriage 20 and the conveyance object A and is positioned on the rails 102, that is, on the second conveying path P2.

As illustrated in FIGS. 6 and 7, the rail 102 includes a rail portion 102a that supports the roller 23, and a support portion 102b that protrudes in the Z direction from the rail portion 102a and supports the conveyance object A. Both the rail portion 102a and the support portion 102b extend in the Y direction with the shape illustrated in FIG. 6.

As is apparent from FIGS. 5 to 7, the child carriage 20 is configured such that the position of the support portion 22 relative to the base 21 in the Z direction can be changed. That is, the child carriage 20 includes a lifting mechanism (not illustrated) that moves the support portion 22 relative to the base 21 in the Z direction and in the direction opposite to the Z direction. The lifting mechanism is an example of a second actuating unit that operates electrically.

In a state where the position of the support portion 22 relative to the base 21 is low and the height of the child carriage 20 is low, the height of the child carriage 20 becomes lower than the height of the side portion 12 of the parent carriage 10 (refer to FIG. 5) and the height of the support portion 102b of the rail 102 (refer to FIG. 7), and the conveyance object A is not supported by the child carriage 20 but is supported by the side portions 12 of the parent carriage 10 or the support portions 102b of the rails 102. The position of the conveyance object A supported by the parent carriage 10 is defined as a first position p1 (refer to FIG. 5), and the position of the conveyance object A supported by the rails 102 is defined as the third position p3 (refer to FIG. 7).

On the other hand, in a state where the position of the support portion 22 relative to the base 21 is high and the height of the child carriage 20 is high, as illustrated in FIG. 6, the height of the child carriage 20 becomes higher than the height of the support portion 22, and the conveyance object A is supported by the support portion 22 of the child carriage 20. The position of the conveyance object A supported by the child carriage 20 is defined as a second position p2.

In this manner, in the present embodiment, by changing the position of the support portion 22 relative to the base 21 in the Z direction, it is possible to change a carriage or a location that supports the conveyance object A in the conveying system 100.

### [Control Configuration]

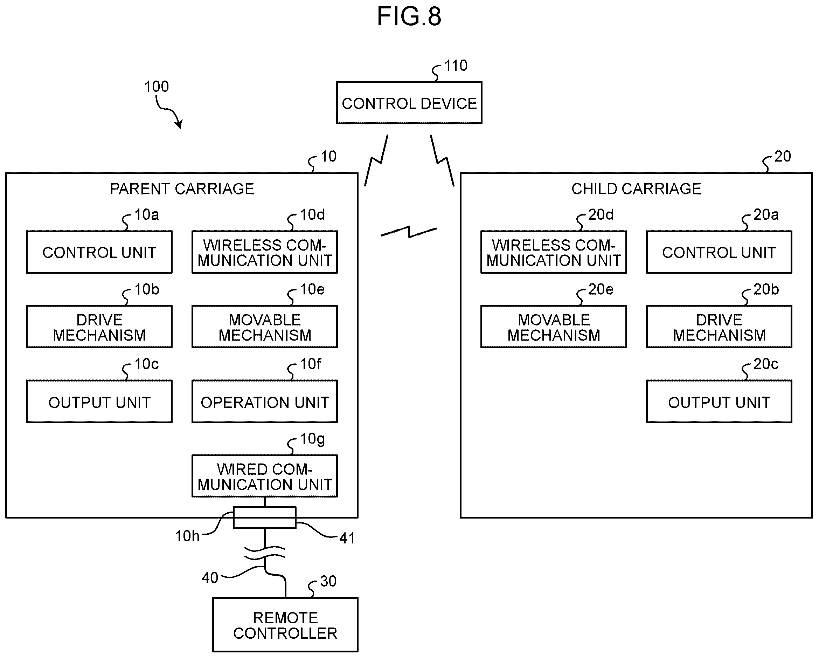

FIG. 8 is a control block diagram of the conveying system 100. The conveying system 100 includes a control device 110 that controls the operations of the parent carriage 10 and the child carriage 20. During the normal operation of the conveying system 100, the control device 110 transmits control signals to the parent carriage 10 and the child carriage 20, for example, through wireless communication such as wireless local area network (LAN) or spatial optical transmission. The parent carriage 10 and the child carriage 20 operate in response to the control signals received from the control device 110. Note that, although FIG. 8 illustrates only one parent carriage 10 and one child carriage 20, when the conveying system 100 includes a plurality of floors, the conveying system 100 also includes a plurality of parent carriages 10 and a plurality of child carriages 20.

In the wireless communication of the control signals within the conveying system 100, the control device 110, the plurality of parent carriages 10, and the plurality of child carriages 20 are identified by IP addresses. That is, each of the control device 110, the parent carriages 10, and the child carriages 20 transmits the control signal including the IP address individually assigned to the device, thereby being able to transmit the control signal to a specific device and avoiding erroneous transmission of the control signal to a device different from the specific device.

The parent carriage 10 includes a control unit 10a, a drive mechanism 10b, an output unit 10c, a wireless communication unit 10d, a movable mechanism 10e, an operation unit 10f, a wired communication unit 10g, and a connector 10h.

The control unit 10a controls the operations of the drive mechanism 10b, the output unit 10c, the wireless communication unit 10d, the movable mechanism 10e, the wired communication unit 10g, and the like in accordance with control signals received from the control device 110 or control signals corresponding to input operations in a remote controller 30 that is connected to the parent carriage 10 in a wired manner. The control unit 10a is a computer (circuit) having a main storage unit such as a central processing unit (CPU), a random access memory (RAM), and a read only memory (ROM), and an auxiliary storage unit such as a solid state drive (SSD), and executes processing according to a predetermined algorithm by operating in accordance with an installed program. The control unit 10a is an example of a first control unit. The drive mechanism 10b, the output unit 10c, the wireless communication unit 10d, the movable mechanism 10e, and the wired communication unit 10g are examples of first actuating units that are controlled and operated by the first control unit.

The drive mechanism 10b is a mechanism that moves movable parts related to the movement or stopping of the parent carriage 10. Specifically, the drive mechanism 10b is a mechanism that moves or stops the parent carriage 10 by rotating or stopping the rotation of the rollers 13, and includes, for example, a motor and a rotation transmission mechanism.

The output unit 10c is, for example, an audio output unit such as a speaker or a display output unit such as a lamp or a display, and performs output by sound or display. The parent carriage 10 may include a plurality of output units 10c.

The wireless communication unit 10d transmits and receives control signals and response signals in a wireless manner between the control device 110 and a wireless communication unit 20d of the child carriage 20.

The movable mechanism 10e is a mechanism that moves movable parts not directly related to the movement or stopping of the parent carriage 10, and includes, for example, a motor and a rotation transmission mechanism for driving a conveyor (not illustrated) that conveys the conveyance object A between the parent carriage 10 and the conveying device 104. The parent carriage 10 may include a plurality of movable mechanisms 10e. In addition, the parent carriage 10 may include the movable mechanism 10e that includes an actuator such as a solenoid for moving a stopper (not illustrated) that limits movement ranges of the parent carriage 10 and the child carriage 20.

The operation unit 10f is a part operated manually by a worker and may include, for example, a press switch, a rotation switch, a lever switch, or a keyboard. The parent carriage 10 may include a plurality of operation units 10f.

The wired communication unit 10g transmits and receives control signals and response signals in a wired manner between the parent carriage 10 and the remote controller 30 that is electrically and communicably connected via connectors 10h and 41 and a cable 40. The connector 41 is fixed to the cable 40 and is configured to be attachable to and detachable from the connector 10h. Note that the control unit 10a may detect that the connector 10h and the connector 41 are connected and the wired communication unit 10g and the remote controller 30 are electrically connected.

The child carriage 20 includes a control unit 20a, a drive mechanism 20b, an output unit 20c, the wireless communication unit 20d, and a movable mechanism 20e.

The control unit 20a controls the operations of the drive mechanism 20b, the output unit 20c, the wireless communication unit 20d, the movable mechanism 20e, and the like in accordance with control signals received from the control device 110 or the parent carriage 10. The control unit 20a is a computer (circuit) having a main storage unit such as a CPU, a RAM, and a ROM, and an auxiliary storage unit such as an SSD, and executes processing according to a predetermined algorithm by operating in accordance with an installed program. The control unit 20a is an example of a second control unit. The drive mechanism 20b, the output unit 20c, the wireless communication unit 20d, and the movable mechanism 20e are examples of second actuating units that are controlled and operated by the second control unit.

The drive mechanism 20b is a mechanism that moves movable parts related to the movement or stopping of the child carriage 20. Specifically, the drive mechanism 20b is a mechanism that moves or stops the child carriage 20 by rotating or stopping the rotation of the rollers 23, and includes, for example, a motor and a rotation transmission mechanism.

The output unit 20c is, for example, an audio output unit such as a speaker or a display output unit such as a lamp or a display, and performs output by sound or display. The child carriage 20 may include a plurality of output units 20c.

The wireless communication unit 20d transmits and receives control signals and response signals in a wireless manner between the control device 110 and the wireless communication unit 10d of the parent carriage 10.

The movable mechanism 20e is a mechanism that moves movable parts not directly related to the movement or stopping of the child carriage 20, and includes, for example, a motor, a rotation transmission mechanism, or a rotary-to-linear conversion mechanism for driving a lifting mechanism that raises and lowers the support portion 22 relative to the base 21. The child carriage 20 may include a plurality of movable mechanisms 20e. In addition, the child carriage 20 may include the movable mechanism 20e that includes an actuator such as a solenoid for moving a stopper (not illustrated) that limits a movement range of the child carriage 20.

In the present embodiment, as control modes of the parent carriage 10 and the child carriage 20, an automatic mode that operates in response to control signals from the control device 110 and a manual mode that operates in response to control signals from the remote controller 30 are set. In the automatic mode, the control unit 10a of the parent carriage 10 controls the drive mechanism 10b, the output unit 10c, the wireless communication unit 10d, the movable mechanism 10e, and the wired communication unit 10g in accordance with control signals wirelessly received from the control device 110, and the control unit 20a of the child carriage 20 controls the drive mechanism 20b, the output unit 20c, the wireless communication unit 20d, and the movable mechanism 20e in accordance with control signals wirelessly received from the control device 110. On the other hand, in the manual mode, the control unit 10a of the parent carriage 10 controls the drive mechanism 10b, the output unit 10c, the wireless communication unit 10d, the movable mechanism 10e, and the wired communication unit 10g in accordance with control signals input in a wired manner from the remote controller 30, and the control unit 20a of the child carriage 20 controls the drive mechanism 20b, the output unit 20c, the wireless communication unit 20d, and the movable mechanism 20e in accordance with control signals that are input in a wired manner from the remote controller 30 to the parent carriage 10 and are transferred in a wireless manner by the parent carriage 10. In the automatic mode, normal conveyance of the conveyance object A is performed, whereas in the manual mode, for example, work such as inspection of the parent carriage 10 or the child carriage 20 is performed. The automatic mode is an example of a first control mode, and the manual mode is an example of a second control mode.

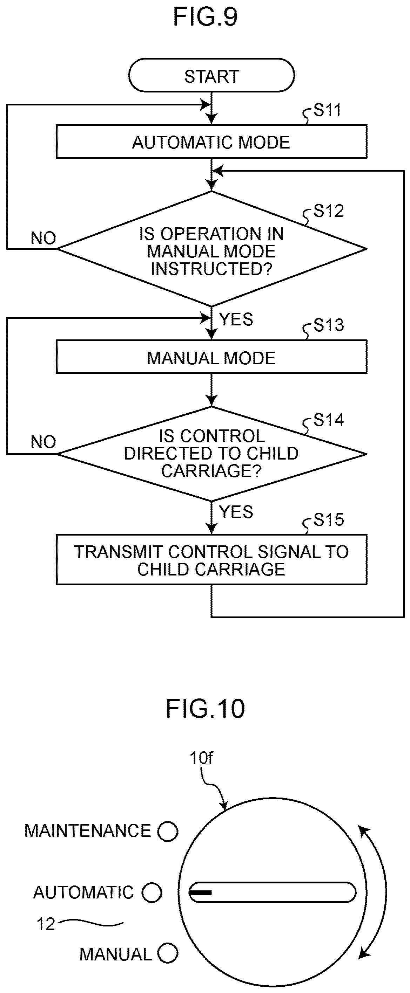

FIG. 9 is a flowchart illustrating a procedure for switching between the automatic mode and the manual mode in the parent carriage 10. As illustrated in FIG. 9, the control mode of the parent carriage 10 is set to be the automatic mode by default (S11). In a case where the operation in the manual mode is instructed (Yes in S12), the control unit 10a switches the control mode to the manual mode and operates in accordance with control signals from the remote controller 30 (S13). In the manual mode (S13), in a case where the control is directed to the child carriage 20 (Yes in S14), the control unit 10a controls the wireless communication unit 10d to transmit a control signal including an identifier indicating the manual mode toward the child carriage 20 (S15). In a case where the operation in the manual mode is not instructed in S12 (No in S12), the control unit 10a returns the control mode to the automatic mode (S11). In addition, in a case where the control is not directed to the child carriage 20 in S14 (No in S14), the control unit 10a executes control in the manual mode (S13) as the control for the parent carriage 10.

FIG. 10 is a schematic diagram illustrating an example of the operation unit 10f provided in the parent carriage 10. The operation unit 10f in FIG. 10 is a switch for switching the control mode, and is configured as a rotation switch as an example. In a case where the operation unit 10f is selected to "automatic" in S12, the control unit 10a determines that the operation in the automatic mode is instructed, that is, the operation in the manual mode is not instructed. In a case where the operation unit 10f is selected to "manual" in S12, the control unit 10a determines that the operation in the manual mode is instructed. Note that "maintenance" is a control mode in a case where an interlock for safety is released and each unit is controlled by the remote controller 30. Note that the operation unit 10f may be configured as a switch other than a rotation switch. The operation unit 10f is an example of a first changeover switch.

In addition, in S12, the control unit 10a can determine that the manual mode is instructed, for example, in a case where it is detected that the wired communication unit 10g and the remote controller 30 are electrically connected. The electrical connection can be determined, for example, on the basis of the presence or absence of current flow in a predetermined circuit including a conductor inside the remote controller 30, or the presence or absence of exchange of a predetermined wired signal between the wired communication unit 10g and the remote controller 30. In this case, for example, in a case where "manual" is selected on the operation unit 10f illustrated in FIG. 10 and it is detected that the wired communication unit 10g and the remote controller 30 are electrically connected, the control unit 10a may determine that the operation in the manual mode is instructed. With such a determination, the state in which the operation in the manual mode is instructed can be determined more reliably, and therefore, the accuracy and safety of the work such as inspection can be more improved.

In S14, the control unit 10a can determine whether a control target of the remote controller 30 is the parent carriage 10 or the child carriage 20, for example, according to the selection state on the operation unit provided in the remote controller 30 or the parent carriage 10. This will be described later.

In S15, the control unit 10a of the parent carriage 10 controls the wireless communication unit 10d to transmit a control signal input from the remote controller 30 toward the wireless communication unit 20d of the child carriage 20 corresponding to the parent carriage 10. In this case, the control unit 10a controls the wireless communication unit 10d to transmit a control signal to which an IP address of the child carriage 20 corresponding to the parent carriage 10, that is, a fixed IP address is assigned, thereby enabling the control signal from the remote controller 30 to be reliably transmitted toward the child carriage 20 corresponding to the parent carriage 10 that is connected to the remote controller 30 in a wired manner. According to such a configuration, a worker can check the specific parent carriage 10 and child carriage 20 that are to be operated in the manual mode, for example, by performing an operation of connecting the connector 41 of the cable 40 to the connector 10h of the parent carriage 10 corresponding to the child carriage 20, or by visually recognizing that the remote controller 30 and the parent carriage 10 are connected in a wired manner via the cable 40. Therefore, according to the present embodiment, it is possible to more reliably prevent a parent carriage 10 and a child carriage 20 other than the specific parent carriage 10 and child carriage 20 from being controlled in the manual mode by the remote controller 30.

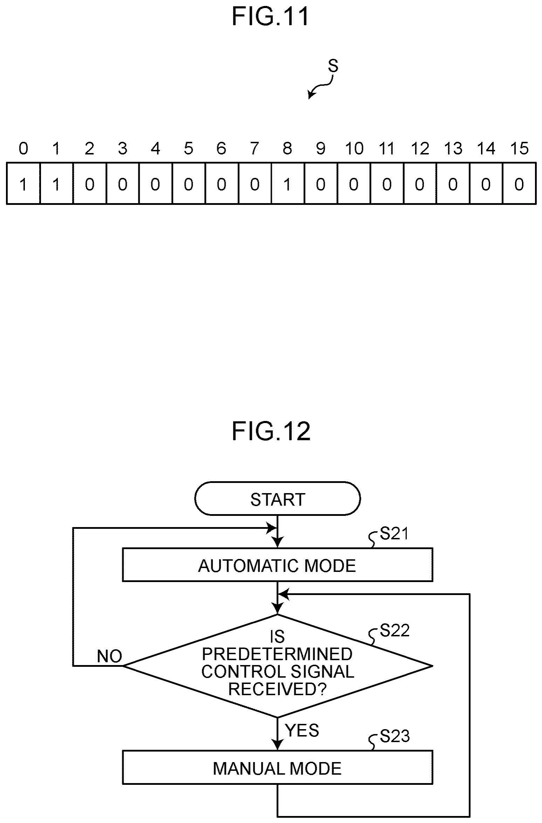

FIG. 11 is an explanatory diagram illustrating a configuration example of a control signal S transmitted from the parent carriage 10 to the corresponding child carriage 20. As illustrated in FIG. 11, the control signal S is configured, for example, as a signal including a plurality of bits (in FIG. 11, a total of 16 bits from bit 0 to bit 15 as one example).

Among these, information on one bit, for example, bit 0, may be set as an identifier indicating that the control signal is a control signal in the manual mode from the remote controller 30. In this case, the identifier may be a numerical value that changes at predetermined time intervals. Specifically, for example, the numerical value of the bit may be set to alternate between "1" and "0" at fixed intervals of 100 [ms]. In this case, the control unit 20a of the child carriage 20 can recognize that the control signal S is a control signal in the manual mode from the remote controller 30 by monitoring the numerical value of the bit serving as the identifier.

In addition, the other bits of the control signal S are assigned to information for operating the drive mechanism 20b, the output unit 20c, the wireless communication unit 20d, the movable mechanism 20e, and the like of the child carriage 20. Specifically, for example, from the first bit to the seventh bit, the control signal S may include:
·information for advancing the child carriage 20 by the drive mechanism 20b ("1" for advance, "0" for no operation),
·information for retreating the child carriage 20 by the drive mechanism 20b ("1" for retreating, "0" for no operation),
·information for raising the support portion 22 by the lifting mechanism serving as the movable mechanism 20e ("1" for raising, "0" for no operation),
·information for lowering the support portion 22 by the lifting mechanism serving as the movable mechanism 20e ("1" for lowering, "0" for no operation),
·information for setting the actuator of the stopper serving as the movable mechanism 20e to a movement-limited state ("1" for movement limit, "0" for no operation),
·information for setting the actuator of the stopper serving as the movable mechanism 20e to a movement-limit-released state ("1" for movement limit release, "0" for no operation), and
·information for releasing an abnormal control state of the control unit 20a of the child carriage 20 ("1" for abnormal control release, "0" for no operation). Furthermore, another bit, for example, the eighth bit, may include
·enable information ("1" for valid, "0" for invalid) for enabling the information for operating the drive mechanism 20b and the movable mechanism 20e (information other than the information for releasing the abnormal control state in the above example).

By including the enable information, it is possible to suppress an input associated with an erroneous operation of the remote controller 30 by the worker and an operation of the child carriage 20 associated with the input, and it is possible to further improve the accuracy and safety of work such as inspection. Note that the above-described pieces of information and the assignment of the pieces of information to the respective bits are merely examples, and the information and the assignment are not limited to the above examples.

In addition, FIG. 12 is a flowchart illustrating a procedure for switching between the automatic mode and the manual mode in the child carriage 20. As illustrated in FIG. 12, the control mode of the child carriage 20 is set to be the automatic mode by default (S21). In a case where a predetermined control signal is received (Yes in S22), the control unit 20a switches the control mode to the manual mode and operates in accordance with control signals from the remote controller 30 (S23). In a case where a predetermined control signal is not received (No in S22), the control unit 10a returns the control mode to the automatic mode (S21).

In S22, the predetermined control signal is, for example, a signal including the identifier indicating that the control signal is a control signal in the manual mode from the above-described remote controller 30. Here, in a case where the identifier is a numerical value that changes at predetermined time intervals as in the above example, specifically, for example, in a case where the numerical value of a predetermined bit is a numerical value set to alternate between "1" and "0" at fixed intervals of 100 [ms], the predetermined control signal is defined as a control signal in which the value of the identifier alternates. In this case, in S22, the control unit 20a determines that the predetermined control signal is not received in a case where the numerical value of the bit does not alternate between "1" and "0" at fixed intervals of 100 [ms]. In this manner, in a case where a rule for change is set in advance for the identifier, the control unit 20a releases the manual mode and changes the mode to the automatic mode in a case where the identifier conforming to the rule is not included. With this setting, it is possible to suppress, for example, an undesirable situation in which the control unit 20a of the child carriage 20 remains in the manual mode and the control in the automatic mode cannot be promptly executed after completion of work such as inspection.

In addition, the transmission of control signals from the parent carriage 10 to the child carriage 20 is executed, for example, at time intervals suitable for smoothly operating the drive mechanism 20b, the output unit 20c, the wireless communication unit 20d, the movable mechanism 20e, and the like. In addition, the time interval of the transmission of the control signal and the time interval of the determination in S22 are set, for example, to be equal to or shorter than the time interval at which the above-described identifier alternates.

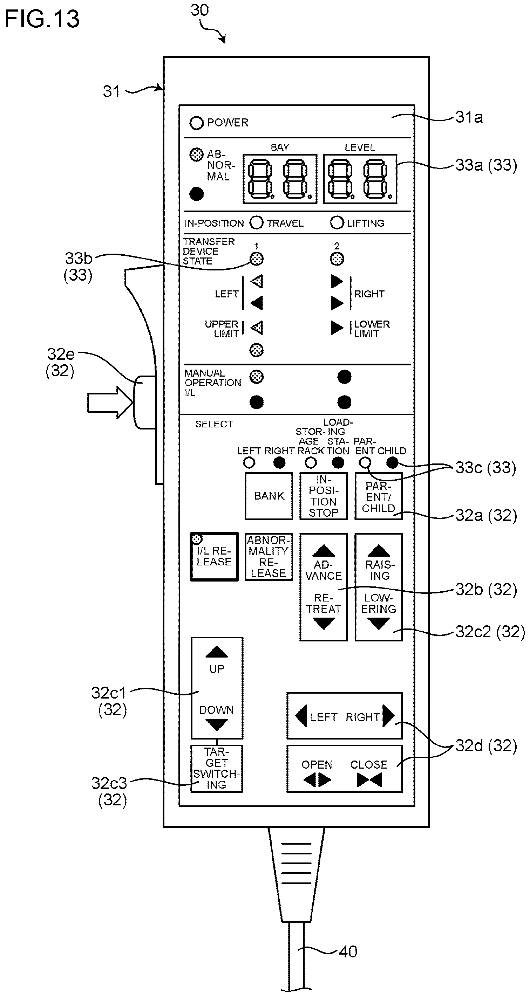

FIG. 13 is a front view of the remote controller 30. As illustrated in FIG. 13, the remote controller 30 includes a housing 31, a plurality of manual operation units 32 provided on a front surface 31a of the housing 31, and a plurality of output units 33. In the example of FIG. 13, the output unit 33 may also be referred to as a display output unit.

An output unit 33a is a display output unit such as a light emitting diode (LED) display or a liquid crystal display (LCD) that displays numerical values or characters, and output units 33b and 33c are display output units such as LED lamps that indicate the current state or the like.

Here, the output unit 33a can display the current position of the parent carriage 10. The current position of the parent carriage 10 on the first conveying path P1 is detected by reading a barcode provided along the first conveying path P1 with a barcode reader provided on the parent carriage 10. The current position of the parent carriage 10 can be accurately detected even in the manual mode.

On the other hand, the position of the child carriage 20 on the second conveying path P2 is detected on the basis of a detection signal from an encoder provided in the drive mechanism 20b of the child carriage 20. In the manual mode, there may be a case where a worker manually moves the child carriage 20, and in such a case, the current position obtained from the detection signal of the encoder may deviate from the actual current position of the child carriage 20. Therefore, the output unit 33a is configured not to display the current position of the child carriage 20.

In addition, the output unit 33a can also display, for example, an error code in a case where the control target is the parent carriage 10 or an error code in a case where the control target is the child carriage 20.

The manual operation unit 32 is, for example, a press switch, but may be a switch other than the press switch.

A manual operation unit 32a is a switch for switching between a control state in which the parent carriage 10 is controlled and a control state in which the child carriage 20 is controlled, in other words, a switch for switching the control target between the parent carriage 10 and the child carriage 20. With such a configuration, an effect is obtained in which the remote controller 30 can be shared by the control for the parent carriage 10 and the control for the child carriage 20. The control state for controlling the parent carriage 10 is an example of a first control state in which the control unit 10a controls the drive mechanism 10b, the output unit 10c, the wireless communication unit 10d, the movable mechanism 10e, and the wired communication unit 10g in accordance with control signals from the remote controller 30. The control state for controlling the child carriage 20 is an example of a second control state in which the control unit 20a controls the drive mechanism 20b, the output unit 20c, the wireless communication unit 20d, and the movable mechanism 20e in accordance with control signals from the remote controller 30. In addition, the manual operation unit 32a is an example of a second changeover switch.

Note that the output unit 33c indicates whether the control target of the remote controller 30 is the parent carriage 10 or the child carriage 20. The worker can recognize the control target of the remote controller 30 on the basis of the output state of the output unit 33c.

Manual operation units 32b, 32c1, 32c2, 32c3, and 32d can be shared between the parent carriage 10 and the child carriage 20. With such a configuration, an effect is obtained in which the number of manual operation units 32 is reduced and the remote controller 30 can be configured in a more compact manner. The manual operation units 32b, 32c1, 32c2, 32c3, and 32d are examples of operation units.

Specifically, the remote controller 30 can output a control signal instructing to advance or retreat the parent carriage 10 or the child carriage 20 selected by the operation of the manual operation unit 32a, in response to an operation in which "advance" or "retreat" is selected on the manual operation unit 32b. In this case, as illustrated in FIG. 1, the directions of advance (F) and retreat (B) of the parent carriage 10 and the child carriage 20 may be predetermined.

In addition, the remote controller 30 can output a control signal instructing to raise or lower the movable mechanism 10e or 20e corresponding to a movable unit, such as a lifting mechanism or a stopper, of the parent carriage 10 or the child carriage 20 selected by the operation of the manual operation unit 32a, in response to an operation in which "**up**" or "down" is selected on the manual operation unit 32c1, or an operation in which "raise" or "lower" is selected on the manual operation unit 32c2. Note that in a case where the parent carriage 10 or the child carriage 20 has a plurality of parts that move up and down, the remote controller 30 may include a plurality of manual operation units 32c1 and 32c2, or may include the manual operation unit 32c3 for switching the operation target, as illustrated in FIG. 13. In addition, the remote controller 30 may also include the manual operation unit 32d for selecting other operations.

Furthermore, the remote controller 30 includes a manual operation unit 32e for outputting enable information. The remote controller 30 can output a control signal including enable information in a case where the manual operation unit 32e is pressed to a predetermined position. In the present embodiment, in a case where the manual operation unit 32e is not pressed, or in a case where the manual operation unit 32e is pressed deeply beyond the predetermined position, the remote controller 30 does not include the enable information in the control signal to be output to the parent carriage 10. In this manner, by setting a predetermined operation of the manual operation unit 32e as a condition for outputting the control signal, it is possible to more reliably reflect the worker's intention in the control operation. In addition, in a case where the manual operation unit 32e is pressed beyond the predetermined position, there is a possibility that the manual operation unit 32e may be inadvertently pressed, for example, in a case where the worker loses balance. In this regard, according to the above configuration, it is possible to suppress the output of the control signal based on the erroneous operation caused by the worker's unstable posture. That is, according to the manual operation unit 32e of the present embodiment, it is possible to further improve the accuracy and safety of work such as inspection.

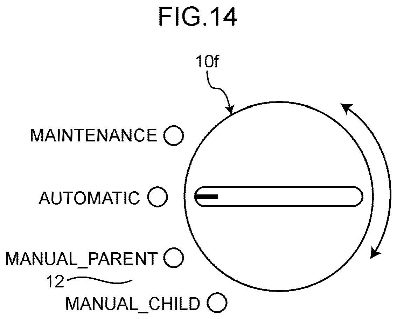

FIG. 14 is a schematic diagram illustrating a modification example of the operation unit 10f. As illustrated in FIG. 14, the control state (first control state) for controlling the parent carriage 10 and the control state (second control state) for controlling the child carriage 20 may be switched by the operation unit 10f provided in the parent carriage 10. With such a configuration, the worker can recognize the control target of the remote controller 30 on the basis of the rotational position of the operation unit 10f.

As described above, in the present embodiment, in a case where the remote controller 30 and the parent carriage 10 (first carriage) are electrically connected via the cable 40, the parent carriage 10 includes the wireless communication unit 10d (signal transmission unit) that wirelessly transmits, to the child carriage 20 (second carriage) corresponding to the parent carriage 10, control signals input to the remote controller 30 for the drive mechanism 20b, the output unit 20c, the wireless communication unit 20d, the movable mechanism 20e, and the like (second actuating units), and in a case where the child carriage 20 receives the control signals from the wireless communication unit 10d, the control unit 20a (second control unit) controls the second actuating units in accordance with the control signals. As a result, a worker can check the specific parent carriage 10 and child carriage 20 that are to be operated in the manual mode, for example, by performing an operation of connecting the cable 40 to the parent carriage 10 corresponding to the child carriage 20, or by visually recognizing that the remote controller 30 and the parent carriage 10 corresponding to the child carriage 20 are connected in a wired manner via the cable 40. Therefore, with such a configuration, an effect that a parent carriage 10 and a child carriage 20 other than the specific parent carriage 10 and child carriage 20 are more reliably prevented from being controlled by the remote controller 30 is obtained.

In addition, in the present embodiment, the control signal transmitted from the wireless communication unit 10d to the child carriage 20 includes an identifier that makes it possible to identify that the control signal is a control signal from the remote controller 30. With such a configuration, for example, an effect is obtained in which the control unit 20a of the child carriage 20 can recognize a state of being controlled in the manual mode on the basis of the control signal received via wireless communication, without requiring a manual operation or the like on the child carriage 20.

In addition, in the present embodiment, the identifier is a numerical value that changes at predetermined time intervals. With such a configuration, for example, an effect is obtained in which the control unit 20a of the child carriage 20 can recognize whether the mode is an automatic mode or a manual mode with a relatively simple signal setting. In addition, for example, when the numerical value stops changing at the predetermined time intervals, the control unit 20a can recognize that the manual mode has ended and shifts to the automatic mode, thereby achieving an effect of promptly resuming control in the subsequent automatic mode.

In addition, in the present embodiment, the parent carriage 10 includes the operation unit 10f (first changeover switch) that manually switches between the automatic mode (first control mode) and the manual mode (second control mode). With such a configuration, for example, an effect is obtained in which it is possible to more reliably perform switching between the automatic mode and the manual mode in the conveying system 100.

In addition, in the present embodiment, the remote controller 30 includes the manual operation unit 32a (second changeover switch) that manually switches between the control state (first control state) in which the parent carriage 10 is controlled and the control state (second control state) in which the child carriage 20 is controlled. With such a configuration, for example, an effect is obtained in which it is possible to more reliably perform switching of the control target by the remote controller 30. In addition, an effect is obtained in which the remote controller 30 can be shared by the control for the parent carriage 10 in the manual mode and the control for the child carriage 20 in the manual mode.

In addition, in the present embodiment, the remote controller 30 includes the manual operation units 32b, 32c1, 32c2, 32c3, and 32d (operation units) that are shared between the operation for inputting control signals of the parent carriage 10 and the operation for inputting control signals of the child carriage 20. With such a configuration, for example, an effect is obtained in which the remote controller 30 can be configured in a more compact manner.

Although embodiments of the present invention have been illustrated above, these embodiments are merely examples and are not intended to limit the scope of the invention. The above-described embodiments can be implemented in various other forms, and various omissions, substitutions, combinations, and changes can be made without departing from the spirit and scope of the invention. In addition, specifications (structure, type, direction, model, size, length, width, thickness, height, number, arrangement, position, material, and the like) of each configuration, shape, and the like can be appropriately changed as needed.

For example, the present invention can also be applied to a conveying system in which second conveying paths are provided on both sides in the width direction of the first conveying path.

### Reference Signs List

- 10: PARENT CARRIAGE (FIRST CARRIAGE)
- 10a: CONTROL UNIT (FIRST CONTROL UNIT)
- 10b: DRIVE MECHANISM (FIRST ACTUATING UNIT)
- 10c: OUTPUT UNIT (FIRST ACTUATING UNIT)
- 10d: WIRELESS COMMUNICATION UNIT (FIRST ACTUATING UNIT)
- 10e: MOVABLE MECHANISM (FIRST ACTUATING UNIT)
- 10f: OPERATION UNIT (FIRST CHANGEOVER SWITCH)
- 10g: WIRED COMMUNICATION UNIT (FIRST ACTUATING UNIT)
- 10h: CONNECTOR
- 11: BASE
- 12: SIDE PORTION
- 13: ROLLER
- 14: SUPPORT PORTION
- 20: CHILD CARRIAGE (SECOND CARRIAGE)
- 20a: CONTROL UNIT (SECOND CONTROL UNIT)
- 20b: DRIVE MECHANISM (SECOND ACTUATING UNIT)
- 20c: OUTPUT UNIT (SECOND ACTUATING UNIT)
- 20d: WIRELESS COMMUNICATION UNIT (SECOND ACTUATING UNIT)
- 20e: MOVABLE MECHANISM (SECOND ACTUATING UNIT)
- 21: BASE
- 22: SUPPORT PORTION
- 23: ROLLER
- 30: REMOTE CONTROLLER
- 31: HOUSING
- 31a: FRONT SURFACE
- 32: MANUAL OPERATION UNIT
- 32a: MANUAL OPERATION UNIT (SECOND CHANGEOVER SWITCH)
- 32b, 32c1, 32c2, 32c3, 32d: MANUAL OPERATION UNIT (OPERATION UNIT)
- 32e: MANUAL OPERATION UNIT
- 33, 33a to 33c: OUTPUT UNIT
- 40: CABLE
- 41: CONNECTOR
- 100: CONVEYING SYSTEM
- 101: RAIL (FIRST RAIL)
- 102: RAIL (SECOND RAIL)
- 102a: RAIL PORTION
- 102b: SUPPORT PORTION
- 103: COLUMN
- 104: CONVEYING DEVICE
- 110: CONTROL DEVICE
- A: CONVEYANCE OBJECT (ARTICLE)
- A1: PALLET
- A2: ARTICLE
- B: RETREAT
- F: ADVANCE
- G: ENTRANCE/EXIT
- p1: FIRST POSITION
- p2: SECOND POSITION
- p3: THIRD POSITION
- p4: FOURTH POSITION
- pd: DELIVERY POSITION
- pr: RELAY POSITION
- P1: FIRST CONVEYING PATH
- P2: SECOND CONVEYING PATH
- S: CONTROL SIGNAL
- X: DIRECTION
- Y: DIRECTION
- Z: DIRECTION

## Claims

1. A conveying system comprising:
a first carriage configured to be movable along a first conveying path and including a first actuating unit and a first control unit configured to control the first actuating unit;
a second carriage configured to be movable along a second conveying path intersecting with the first conveying path and movable between the first carriage and the second conveying path, including a second actuating unit and a second control unit configured to control the second actuating unit, the second carriage being configured to carry an article;
a remote controller configured to be connected to the first carriage via a cable, including a manual operation unit, the remote controller being configured to input a control signal corresponding to an operation of the manual operation unit to the first carriage via the cable; and
a control device configured to output a control signal to the first control unit and the second control unit in a wireless manner,
wherein the first carriage is configured to convey the second carriage and the article along the first conveying path,
the first carriage includes a signal transmission unit configured to transmit, in a wireless manner, a control signal of the second actuating unit input from the remote controller to the second carriage corresponding to the first carriage in a case where the remote controller and the first carriage are connected via the cable, and
the second control unit is configured to control the second actuating unit in accordance with the control signal in a case where the second carriage receives the control signal from the signal transmission unit.

2. The conveying system according to claim 1, wherein the control signal transmitted from the signal transmission unit to the second carriage includes an identifier capable of identifying that the control signal is a control signal from the remote controller.

3. The conveying system according to claim 2, wherein the identifier is a numerical value that changes at predetermined time intervals.

4. The conveying system according to claim 1, wherein the first carriage includes a first changeover switch configured to manually switch between a first control mode in which the first control unit is configured to control the first actuating unit in accordance with the control signal from the control device and a second control mode in which the first control unit is configured to control the first actuating unit in accordance with the control signal from the remote controller or the second control unit of the second carriage corresponding to the first carriage is configured to control the second actuating unit in accordance with the control signal from the remote controller.

5. The conveying system according to claim 1, wherein the remote controller includes a second changeover switch configured to manually switch between a first control state in which the first control unit is configured to control the first actuating unit in accordance with the control signal from the remote controller and a second control state in which the second control unit of the second carriage corresponding to the first carriage is configured to control the second actuating unit in accordance with the control signal from the remote controller.

6. The conveying system according to claim 4 or 5, wherein the manual operation unit includes an operation unit shared by an operation of inputting the control signal of the first carriage and an operation of inputting the control signal of the second carriage.
